# FASCICULE DE BREVET EUROPEEN

(11) **EP 3 511 970 B1**
(45) Date de publication et mention de la délivrance du brevet: **15.12.2021**
(21) Numéro de dépôt: 19150497.6
(22) Date de dépôt: 07.01.2019
(51) Int. Cl.: G01R 31/00, H02H 3/33, H02H 3/347, H01H 83/14, H01H 83/22, H01H 71/04, H02H 3/04

(54) **INTERRUPTEUR ÉLECTRONIQUE AVEC UN DÉTECTEUR POUR FOURNIR DE L'INFORMATION SUR LE DÉCLENCHEMENT DE L'INTERRUPTEUR À UN BUS**
ELEKTRISCHER SCHALTER MIT EINEM DETEKTOR WELCHER INFORMATIONEN ÜBER DIE AUSLÖSUNG DES SCHALTERS IN EINEN BUS EINSPEIST
ELECTRONIC SWITCH WITH A DETECTOR FOR PROVIDING INFORMATION ABOUT THE TRIPPING OF THE SWITCH ON A BUS

(30) Priorité: 08.01.2018 FR 1850131
(43) Date de publication de la demande: 17.07.2019
(73) Titulaire: HAGER-ELECTRO SAS, 67210 Obernai (FR)
(72) Inventeur: CINEUX, Clément, 68000 COLMAR (FR); SCHNEIDER, Michel, 67560 ROSHEIM (FR); SIEGRIST, Anthony, 67460 SOUFFELWEYERSHEIM (FR); VINCENT, Renaud, 67210 OBERNAI (FR)
(74) Mandataire: Cabinet Nuss

(56) Documents cités:
- EP-A1- 3 223 381
- EP-A1- 3 242 369
- DE-A1- 19 743 900
- FR-A1- 3 050 081

## Description

La présente invention concerne un interrupteur, en particulier un déclencheur électronique, comprenant un organe de captage de courant électrique agencé pour capter par induction un courant électrique circulant dans une ligne de conduite de courant électrique qui traverse l'interrupteur, lequel interrupteur étant agencé pour couper le courant sur la ligne en cas de présence sur la ligne d'un courant de défaut, le courant de défaut étant un courant différentiel, lequel interrupteur comprend un organe de mesure relié à l'organe de captage et agencé pour délivrer à une sortie une tension correspondante au courant électrique capté par l'organe de captage, lequel interrupteur comprend un organe de déclenchement relié à ladite sortie de l'organe de mesure et agencé pour activer un mécanisme d'interruption de la ligne de conduite de courant électrique lorsque la tension délivrée par l'organe de mesure franchit un seuil prédéterminé, ledit interrupteur comprenant un détecteur relié à la sortie de l'organe de mesure et agencé pour détecter l'activation du mécanisme d'interruption par l'organe de déclenchement et produire un premier signal d'état lorsque l'activation du mécanisme d'interruption par l'organe de déclenchement a été détectée.

Un tel interrupteur est connu et est par exemple commercialisé sous la référence CDA440C par la demanderesse. L'organe de captage capte par induction du courant électrique circulant dans la ligne de conduite de courant électrique qui traverse l'interrupteur. L'organe de mesure délivre une tension à l'image du courant capté. Lorsque la tension délivrée par l'organe de mesure franchit un seuil prédéterminé, un mécanisme d'interruption de la ligne de conduite de courant électrique est activé afin d'interrompre le courant électrique qui circule dans la ligne de conduite de courant électrique qui traverse l'interrupteur. L'interrupteur permet ainsi d'éviter des problèmes causés par un courant électrique de défaut de type différentiel qui se produirait dans la ligne de conduite de courant. L'interrupteur opère donc comme un dispositif de protection placé dans la ligne de courant électrique.

De nos jours les immeubles sont de plus en plus équipés d'un bus domestique permettant de fournir des données à divers endroits dans l'immeuble. D'autre part il y a un intérêt croissant pour collecter des données relatives aux fonctionnements d'appareils électriques afin entre autres d'améliorer leur fiabilité et d'anticiper des problèmes de fonctionnement. Toutefois une liaison entre un interrupteur, en particulier un déclencheur électronique, et un bus sur lequel des données peuvent circuler peut poser un problème, car il faut prélever les données au niveau de l'organe de mesure ou de l'organe de déclenchent. Une telle intervention risque de perturber le fonctionnement de l'organe de mesure ou de l'organe de déclenchent et d'affecter ainsi la sécurité.

Le document FR3050081 a pour objet un dispositif de détection d'un courant de défaut circulant dans une ligne de courant, comprenant un circuit magnétique traversé par cette dernière et comportant un enroulement primaire, un circuit de mesure de courant circulant dans ledit enroulement, un circuit de traitement pour fournir un signal de défaut lorsque le courant dans l'enroulement dépasse un seuil déterminé.

Le document EP3223381 concerne un système électronique comprenant un circuit de chauffage et un système de détection de défaut comprenant un convertisseur courant-tension, un détecteur de niveau de tension et un interrupteur contrôlable connecté en série avec l'élément chauffant, un défaut étant détecté en réponse à une tension secondaire supérieure à une valeur seuil.

Le document DE19743900 a pour objet un disjoncteur comprenant un dispositif de mesure de courant différentiel et un dispositif de commande prévu pour interrompre le réseau quand le courant différentiel dépasse un certain seuil, un transformateur de courant à travers lequel passent les conducteurs de courant.

L'invention a pour but de réaliser un interrupteur qui permet de fournir de l'information à un bus de données sans pour autant devoir intervenir directement sur le fonctionnement de l'organe de mesure ou de déclenchement.

A cette fin un interrupteur selon l'invention est tel qu'énoncé par la revendication 1. La présence du détecteur permet de détecter l'activation du mécanisme d'interruption par l'organe de déclenchement, et cela sans devoir intervenir sur le fonctionnement de l'organe de mesure ou de déclenchement. En effet comme le détecteur est relié à l'organe de mesure, qui lui-même est relié à l'organe de déclenchement, c'est le fonctionnement de l'organe de déclenchement qui est surveillé sans interférence sur le mécanisme d'interruption ou celui de l'organe de déclenchement. La production du premier signal d'état par le détecteur permet de fournir ce premier signal d'état à l'unité de traitement qui peut aussi recevoir le deuxième signal d'état indiquant une coupure mécanique de la ligne de conduite de courant électrique. Sur base de ces signaux d'état l'unité de traitement peut alors produire un message de coupure de la ligne de courant et de la cause de cette coupure. Ce dernier message peut alors facilement être fourni à un bus de données.

Une première forme de réalisation préférentielle d'un interrupteur suivant l'invention est caractérisée en ce que l'organe de captage comprend un premier élément et l'organe de mesure comprend une première unité, le premier élément étant relié à la première unité, le premier élément étant agencé pour capter une composante différentielle alternative du courant électrique, laquelle première unité étant agencée pour délivrer une tension correspondante à la composante différentielle alternative, laquelle première unité comporte un premier pôle en liaison électrique avec la sortie de l'organe de mesure et avec une première broche d'entrée d'un premier composant du détecteur. Cela permet de constater que l'interruption de courant a été causée par une composante différentielle alternative du courant électrique circulant dans la ligne.

Une deuxième forme de réalisation préférentielle d'un interrupteur électronique suivant l'invention est caractérisée en ce que l'organe de captage comprend un deuxième élément et l'organe de mesure comprend une deuxième unité, le deuxième élément étant relié à la deuxième unité, le deuxième élément étant agencé pour capter une composante différentielle continue du courant électrique, laquelle deuxième unité étant agencée pour délivrer une tension correspondante à la composante différentielle continue, laquelle deuxième unité comporte un deuxième pôle en liaison électrique avec la sortie de l'organe de mesure et avec une deuxième broche d'entrée d'un deuxième composant du détecteur. Cela permet de constater que l'interruption de courant a été causée par une composante différentielle continue du courant électrique circulant dans la ligne.

Une troisième forme de réalisation préférentielle d'un interrupteur électronique suivant l'invention est caractérisée en ce que le premier composant du détecteur est agencé pour détecter l'activation du mécanisme d'interruption par l'organe de déclenchement sous contrôle de la première unité de l'organe de mesure et produire le premier signal d'état, lequel deuxième composant du détecteur est agencé pour détecter l'activation du mécanisme d'interruption par l'organe de déclenchement sous contrôle de la deuxième unité de l'organe de mesure et produire un troisième signal d'état lorsque l'activation du mécanisme d'interruption par l'organe de déclenchement a été détectée par la deuxième unité, lequel deuxième composant est relié à une troisième entrée de l'unité de traitement pour y fournir le troisième signal d'état. Ceci permet de constater une coupure de la ligne causée soit par courant différentiel alternatif, soit par un courant différentiel continu.

Une quatrième forme de réalisation préférentielle d'un interrupteur électronique suivant l'invention est caractérisée en ce que le premier, respectivement le deuxième, composant du détecteur comporte un premier, respectivement un deuxième, comparateur. L'usage d'un comparateur permet une réalisation simple et fiable du détecteur.

Selon une variante de l'invention et de ses formes de réalisation préférentielles, l'unité de traitement est formée par une unité de gestion d'énergie électrique d'un bâtiment.

Selon une possibilité des deuxième, troisième et quatrième formes de réalisation préférentielles, un condensateur est branché entre le premier et le deuxième pôle. L'usage d'un condensateur offre une réalisation fiable et peu onéreuse de l'interrupteur selon l'invention.

Selon une possibilité des première, deuxième, troisième et quatrième formes de réalisation préférentielles, un condensateur est branché entre le premier pôle et un point de référence.

Selon une spécificité de ces possibilités, le condensateur peut être relié à la sortie de l'organe de mesure.

De préférence, selon ces possibilités et cette spécificité, le premier pôle est directement relié à une deuxième sortie de l'organe de mesure qui elle-même est reliée à l'organe de déclenchement.

L'invention sera maintenant décrite plus en détails à l'aide des dessins qui illustrent des formes de réalisation préférentielle d'un interrupteur selon l'invention. Dans les dessins :
La figure 1 illustre une première forme de réalisation d'un interrupteur selon l'invention ;
La figure 2 illustre une deuxième forme de réalisation d'un interrupteur selon l'invention ;
La figure 3 illustre une troisième forme de réalisation d'un interrupteur selon l'invention ; et
La figure 4 illustre l'évolution dans le temps de la tension électrique présente sur la connexion entre l'organe de mesure et l'organe de déclenchement.

Dans les dessins une même référence a été attribuée à un même élément ou à un élément analogue.

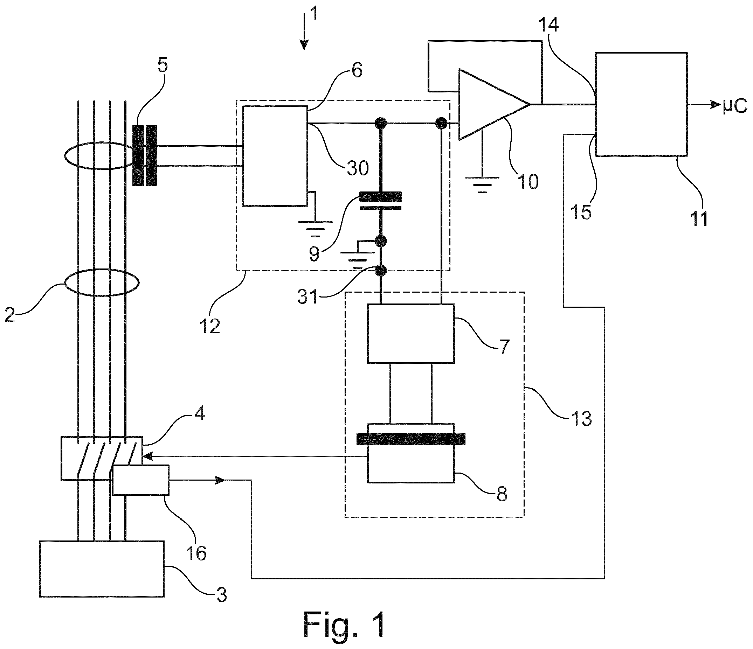

Une première forme de réalisation d'un interrupteur 1 selon l'invention est illustrée à la figure 1. Cet interrupteur est de préférence formé par un déclencheur électronique. L'interrupteur est agencé pour être placé sur une ligne de conduite de courant électrique 2 qui traverse l'interrupteur. Cette ligne de courant électrique 2 sert à alimenter en courant électrique une charge 3. La ligne est par exemple formée de trois conducteurs de phase et d'un conducteur de neutre du réseau. Il sera toutefois clair que l'invention n'est pas limitée à une ligne à quatre conducteurs et s'applique aussi à d'autres types de lignes de courant électrique.

L'interrupteur comporte un mécanisme d'interruption 4 destiné à être placé sur la ligne de conduite de courant 2 et agencé pour interrompre le courant électrique qui circule à travers cette ligne de courant. Ainsi l'interrupteur permet de couper le courant sur la ligne en cas de présence sur la ligne d'un courant de défaut. Par courant de défaut on entend un courant différentiel sur la somme vectorielle des courants circulants dans les conducteurs actifs de la ligne de courant.

L'interrupteur comporte également un organe de captage de courant électrique 5. De préférence l'organe de captage comporte un premier élément 5 qui est agencé pour capter par induction une composante différentielle alternative du courant électrique circulant dans la ligne 2. Ce premier élément 5 de l'organe de captage est de préférence réalisé par une bobine ou un tore qui sera placé autour d'une section de la ligne 2. Le tore de mesure entoure les conducteurs actifs et réalise la somme vectorielle des courants circulant dans la ligne, mettant ainsi en évidence un courant de fuite. Une première unité 6 d'un organe 12 de mesure de courant est reliée au premier élément 5 de l'organe de captage. Cette première unité 6 de l'organe de mesure est agencée pour délivrer une tension correspondante à la composante différentielle alternative du courant captée par le premier élément. A cette fin la première unité reçoit la somme vectorielle des courants circulant dans la ligne telle que fournie par le tore et convertit cette somme en une valeur de tension. Dans le cas idéal, c'est-à-dire en absence de courant de défaut, la somme vectorielle est égale à zéro, et donc la tension correspondante à la composante différentielle alternative captée sera également égale à zéro. En présence de courant de défaut, la somme vectorielle n'est pas égale à zéro, et donc la tension correspondante à la composante différentielle alternative du courant captée sera différente de zéro.

L'interrupteur comprend également un organe de déclenchement 13 relié à l'organe de mesure et agencé pour activer le mécanisme d'interruption 4 de la ligne de conduite de courant électrique lorsque la valeur de tension délivrée par la première unité 6 de l'organe de mesure franchit un premier seuil prédéterminé. La première unité 6 de l'organe de mesure 12 comporte un premier pôle de sortie 30, qui est relié via un condensateur 9 à une autre sortie 31 de cette première unité. Cette autre sortie 31 est elle-même reliée à une première entrée de l'organe de déclenchement 13. Une deuxième entrée de l'organe de déclenchement est directement reliée à ce premier pôle de sortie 30.

L'organe de déclenchement 13 comporte de préférence un élément de commande 7 qui commande l'alimentation en énergie d'un relais 8, qui lui-même commande l'ouverture du mécanisme d'interruption 4.

Le premier pôle de sortie 30 de la première unité 6 de l'organe de mesure 12 est également reliée à un premier composant 10 d'un détecteur agencé pour détecter l'activation par l'organe de mesure et l'organe de déclenchement du mécanisme d'interruption 4 et produire un premier signal d'état lorsque l'activation du mécanisme d'interruption par l'organe de déclenchement a été détectée. Le premier composant du détecteur comporte une sortie qui est relié à une première entrée 14 d'une unité de traitement 11 pour y fournir le premier signal d'état. Une deuxième entrée 15 de l'unité de traitement est agencée pour recevoir un deuxième signal d'état indiquant une coupure mécanique de la ligne de conduite de courant électrique. Ce deuxième signal d'état est par exemple produit par un élément 16 qui est en liaison avec le mécanisme d'interruption 4. Le premier composant 10 du détecteur est par exemple formé par un premier comparateur dont une première broche est reliée au premier pôle 30 de la première unité de l'organe de mesure 12.

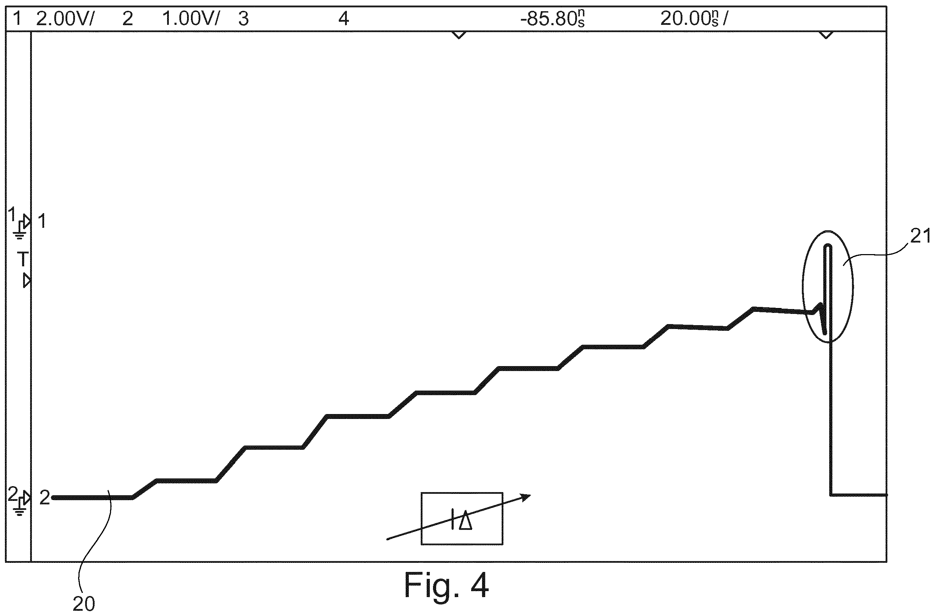

Lorsque le courant électrique circule dans la ligne de conduite 2, le premier élément de l'organe de captage 5 va capter du courant circulant dans cette ligne et ce courant capté sera transmis à la première unité de l'organe de mesure. Si le courant circule sans défaut dans la ligne de conduite, le premier organe de mesure recevra une somme vectorielle des courants égale à zéro. S'il y a un courant de défaut présent sur la ligne, la somme vectorielle des courants fournie par le premier élément ne sera plus égale à zéro et donc la tension délivrée par la première unité ne sera également pas égale à zéro. Cette tension sera délivrée au premier pôle 30 de sortie de la première unité 6 de l'organe de mesure 12 et va donc charger le condensateur 9, comme illustré par la ligne 20 à la figure 4. Cette tension sera également fournie à la deuxième entrée de l'organe de déclenchement 13.

Le condensateur 9 va ainsi se charger. Si le courant de défaut continue à être présent sur la ligne de conduite 2, la tension au premier pôle continuera à être délivré et à charger le condensateur. La présence du courant de défaut va donc avoir pour conséquence que la tension fournie par l'organe de mesure augmente jusqu'à activer l'organe de déclenchement. On voit alors un pic de tension 21 apparaître, comme illustré à la figure 4, indiquant que le relais a déclenché. En effet, lorsque la tension délivrée au premier pôle de sortie aura franchi un premier seuil, par exemple de 4,2V, le condensateur aura une charge suffisante pour activer l'organe de déclenchement. Le condensateur va alors se décharger dans le relais 8 ce qui provoque le déclenchement de celui-ci. Cela se traduit par un mouvement mécanique de la palette du relais qui en ouvrant le circuit magnétique provoque le pic de tension. Ce mouvement de la palette du relais va à son tour libérer le mécanisme d'interruption 4 et interrompre la circulation dans la ligne de conduite 2.

Puisque le premier composant 10 du détecteur est relié au premier pôle 30 de sortie de la première unité 6 de l'organe de mesure 12, il va également détecter le pic de tension 21 qui initialise l'activation du mécanisme d'interruption 4. Cette détection est par exemple réalisée en utilisant en tant que détecteur un comparateur qui compare la tension délivrée au premier pôle 30 à un seuil de détection. Ce dernier n'a pas nécessairement la même valeur que le premier seuil, qui est un seuil de déclenchement, et qui est pris en considération par l'organe de déclenchement. Ainsi le premier composant du détecteur va produire un premier signal d'état indiquant l'activation du mécanisme d'interruption 4. Ce premier signal d'état va alors être transmis à l'unité de traitement 11 qui pourra ainsi produire, sur base de ce signal d'état reçu, un message de coupure de la ligne de courant et indiquant que la cause de cette coupure est due à la présence d'un courant de défaut ayant une composante alternative sur la ligne de conduite de courant. L'unité de traitement va alors remettre ce message au bus domestique auquel elle est reliée.

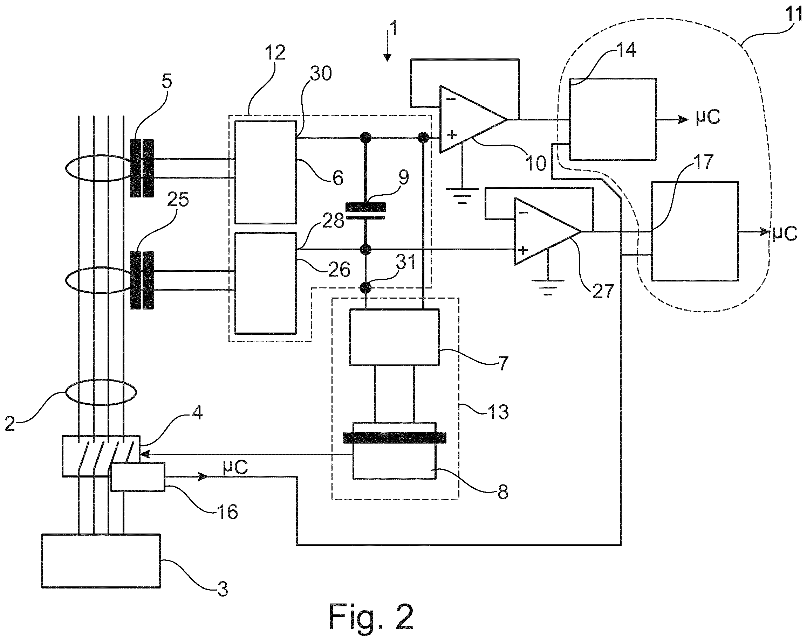

La forme de réalisation de l'interrupteur électronique illustrée à la figure 2 se distingue de celle de la figure 1 par la présence d'une deuxième unité 26 faisant partie de l'organe de mesure 12, d'un deuxième organe de captage 25 et d'un deuxième composant 27 du détecteur. Le deuxième organe de captage 25 est placé sur la ligne de conduite de courant électrique 2 et est relié à la deuxième unité 26 de l'organe de mesure. Le deuxième élément étant agencé pour capter une composante différentielle continue du courant électrique circulant dans la ligne de conduite 2. De préférence le deuxième organe de captage fonctionne selon le principe de la saturation magnétique du tore qui réalise le captage par induction, comme décrit dans le brevet Européen 2 870 670. Dans cette dernière forme de réalisation le tore est formé par deux enroulements sur un noyau magnétique. Le premier enroulement reçoit un courant d'excitation et induit ainsi un flux dans le deuxième enroulement. L'amplitude du signal ainsi captée par le deuxième enroulement varie en fonction du niveau de saturation magnétique du tore provoquée par la composante continu du courant différentiel qui circule dans la ligne de conduite de courant. Cette variation d'amplitude permet alors de déterminer la composante différentielle continue du courant électrique circulant dans la ligne de conduite 2 de courant. L'invention n'est bien entendu pas limitée à la forme de réalisation faisant usage d'un tore à deux enroulements.

La deuxième unité 26 est agencée pour délivrer une tension correspondante à la composante différentielle continue captée par le deuxième organe 25 de captage. Un deuxième pôle de la deuxième unité est relié à une entrée du deuxième composant 27 du détecteur. Le condensateur 9 est branché entre le premier pôle 30 de la première unité 6 et le deuxième pôle 28 de la deuxième unité 26. Le deuxième composant 27 possède une sortie reliée à une troisième entrée 17 de l'unité de traitement 11. Lorsque la deuxième unité recevra une composante différentielle continue captée par le deuxième organe de captage qui est différent de zéro, c'est-à-dire un niveau de saturation magnétique du tore qui est différent de zéro, la deuxième unité va délivrer une tension correspondante à cette composante différentielle continue. Si cette tension franchit un deuxième seuil prédéterminé, de par exemple 2,2V, elle va provoquer le déclenchement du mécanisme d'interruption. Le deuxième composant du détecteur va également recevoir cette information qu'un déclenchement a eu lieu et va ainsi produire un troisième signal d'état.

Puisque le premier pôle de la première unité de l'organe de mesure est relié au premier composant du détecteur et que le deuxième pôle de la deuxième unité de l'organe de mesure est relié à la troisième entrée de l'unité de traitement, cette dernière sera en mesure de constater si le signal de statut provient de la première ou de la deuxième unité de l'organe de mesure et donc si l'interruption de courant est due à un composant de courant différentiel alternatif ou continu.

Bien entendu il sera clair que l'interrupteur suivant l'invention pourrait aussi être formé par la forme de réalisation reprise à la figure 2 mais sans la première unité 6 et sans le premier composant du détecteur. Dans cette forme de réalisation il n'y a également pas de condensateur 9 car la détection d'un courant de défaut de type continu utilise une alimentation non représentée sur la figure. Il n'est donc pas nécessaire d'emmagasiner de l'énergie pour déclencher le relais.

La fourniture des signaux d'état à l'unité de traitement va permettre à cette dernière de reconnaître la cause du déclenchement du mécanisme d'interruption. Ainsi lorsque l'unité de traitement va recevoir pratiquement simultanément le premier signal d'état à sa première entrée et le troisième signal d'état à sa deuxième entrée elle en déduira que le mécanisme d'interruption a été activé par l'organe de déclenchement. Plus particulièrement elle sera en mesure de détecter que c'est un courant de défaut qui a provoqué le déclenchement. Si par contre ce sont les deuxième et troisième signaux d'état qui sont fournis à l'unité de traitement, cette dernière en déduira que c'est un courant de défaut différentiel continu qui a provoqué le déclenchement. Par contre si seul le deuxième signal d'état est reçu, l'unité de traitement en déduira que ce n'est pas un courant de défaut qui a provoqué le déclenchement, mais une intervention humaine.

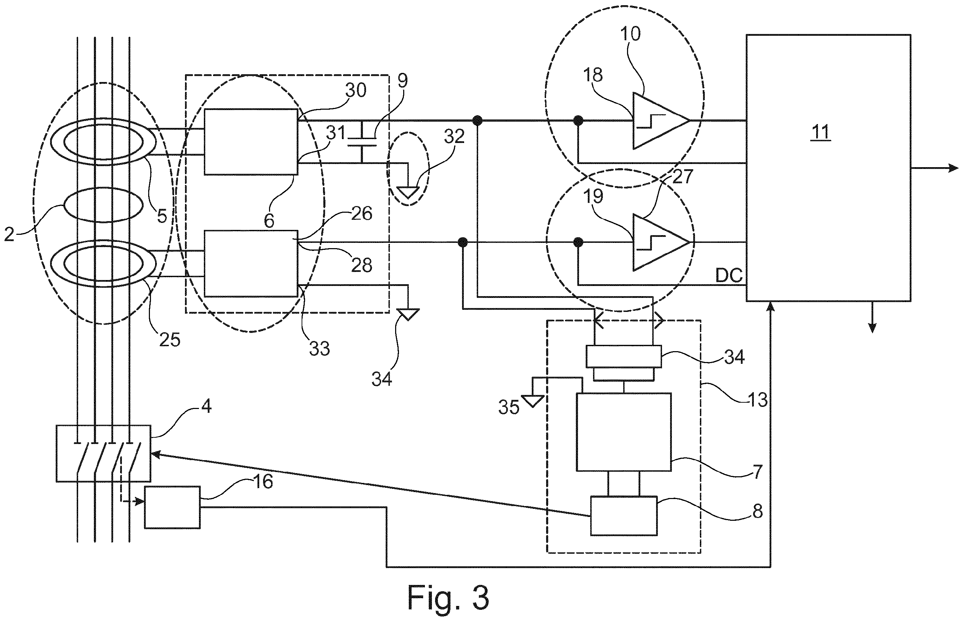

La figure 3 illustre encore une troisième forme de réalisation d'un interrupteur suivant l'invention. Cette forme de réalisation se distingue de celle de la figure 2 par la connexion entre l'organe de mesure 6, 26, l'organe de déclenchement 13 et le détecteur 10, 27. Le premier 6, respectivement le deuxième 26, organe de mesure comporte un troisième 31, respectivement un quatrième 33, pôle de sortie. Le condensateur 9 est branché entre le premier et le troisième pôle de sortie du premier organe de mesure. Le troisième pôle de sortie du premier organe de mesure est relié à un point de référence 32. Le quatrième pôle du deuxième organe de mesure est relié à un autre point de référence 34, qui le cas échéant peut être le même que le point de référence 32. L'organe de déclenchement est relié à encore un autre point de référence 35, qui le cas échéant peut être le même que le point de référence 32.

Le premier, respectivement le deuxième, pôle de sortie du premier, respectivement du deuxième, organe de mesure sont d'une part reliés à un autre comparateur 34, qui fait partie de l'organe de déclenchement 13, et d'autre part à une quatrième 18, respectivement une cinquième 19, entrée de l'unité de traitement 11. Cet autre comparateur 35 est agencé pour détecter le franchissement du premier, respectivement du deuxième, seuil par la tension délivré par le premier, respectivement le deuxième, organe de mesure. Lorsque cet autre comparateur détecte que le premier et/ou le deuxième seuil est franchi, il communique cette information à la commande de relais 8 pour ainsi provoquer l'activation du mécanisme d'interruption 4.

L'activation du relais 8 sera également fournie au premier, respectivement au deuxième détecteur, ainsi qu'à la quatrième, respectivement une cinquième, entrée de l'unité de traitement 11. Cette dernière va alors constater qu'un signal est présent sur la première et la quatrième, respectivement la troisième et la cinquième entrée et va ainsi être en mesure de déterminer le signal d'état.

Le déclenchement du relais 8 sera détecté par les détecteurs 10 et/ou 27. L'unité de traitement 11 va alors selon l'état des signaux présents sur ces entrées 14, 15, 17, 18 et 19 être en mesure de constituer un signal d'état.

## Revendications

1. Interrupteur (1), en particulier un déclencheur électronique, comprenant
un organe de captage (5, 25) de courant électrique agencé pour capter par induction un courant électrique circulant dans une ligne de conduite de courant électrique (2) qui traverse l'interrupteur (1),
lequel interrupteur (1) comprend un organe de mesure (12) relié à l'organe de captage (5, 25) et agencé pour délivrer à une sortie (30) une tension correspondante au courant électrique capté par l'organe de captage (5, 25),
lequel interrupteur (1) comprend un organe de déclenchement (13) relié à ladite sortie (30) de l'organe de mesure (12), l'organe de déclenchement (13) comprenant un relais (8) pour activer un mécanisme d'interruption (4) de la ligne de conduite de courant électrique (2) lorsque la tension délivrée par l'organe de mesure (12) franchit un premier seuil prédéterminé,
ledit interrupteur (1) comprend un détecteur (10) relié à la sortie (30) de l'organe de mesure (12),
ledit détecteur (10) étant agencé pour détecter l'activation du mécanisme d'interruption (4) par l'organe de mesure (12) et par l'organe de déclenchement (13) et produire un premier signal d'état lorsque l'activation du mécanisme d'interruption (4) par l'organe de mesure (12) et par l'organe de déclenchement (13) a été détectée,
ledit interrupteur (1) est **caractérisé en ce que**
le détecteur (10) est agencé pour détecter un pic de tension (21) qui apparaît sur la sortie (30) lorsque le mécanisme d'interruption (4) est activé et est agencé pour produire le premier signal d'état sur la base de ladite détection du pic de tension (21),
ledit interrupteur comprend une unité de traitement (11),
le détecteur (10) est relié à une première entrée (14) d'une unité de traitement (11) pour y fournir le premier signal d'état,
laquelle unité de traitement (11) comprend une deuxième entrée (15) agencée pour recevoir un deuxième signal d'état indiquant une coupure mécanique de la ligne de conduite de courant électrique (2),
laquelle unité de traitement (11) est agencée pour produire sur base des signaux d'état reçus un message de coupure de la ligne de courant (2) et comprenant la cause de cette coupure.

2. Interrupteur suivant la revendication 1, **caractérisé en ce que** l'organe de captage comprend un premier élément (5) et l'organe de mesure (12) comprend une première unité (6), le premier élément (5) étant relié à la première unité (6), le premier élément (5) étant agencé pour capter une composante différentielle alternative du courant électrique, laquelle première unité (6) étant agencée pour délivrer une tension correspondante à la composante différentielle alternative captée, laquelle première unité (6) comporte un premier pôle (30) en liaison électrique avec la sortie de l'organe de mesure (12) et avec une première broche d'entrée d'un premier composant (10) du détecteur.

3. Interrupteur suivant la revendication 1 ou 2, **caractérisé en ce que** l'organe de captage comprend un deuxième élément (25) et l'organe de mesure (12) comprend une deuxième unité (26), le deuxième élément (25) étant relié à la deuxième unité (26), le deuxième élément (25) étant agencé pour capter une composante différentielle continue du courant électrique, laquelle deuxième unité (26) étant agencée pour délivrer une tension correspondante à la composante différentielle continue, laquelle deuxième unité (26) comporte un deuxième pôle (28) en liaison électrique avec la sortie de l'organe de mesure (12) et avec une deuxième broche d'entrée d'un deuxième composant (27) du détecteur.

4. Interrupteur suivant les revendications 2 et 3, **caractérisé en ce que** le premier composant (10) du détecteur est agencé pour détecter l'activation du mécanisme d'interruption (4) par l'organe de déclenchement (13) sous contrôle de la première unité (6) de l'organe de mesure (12) et produire le premier signal d'état, lequel deuxième composant (27) du détecteur est agencé pour détecter l'activation du mécanisme d'interruption (4) par l'organe de déclenchement (13) sous contrôle de la deuxième unité (26) de l'organe de mesure (12) et produire un troisième signal d'état lorsque l'activation du mécanisme d'interruption (4) par l'organe de déclenchement (13) a été détectée par la deuxième unité (26), lequel deuxième composant (27) est relié à une troisième entrée (17) de l'unité de traitement (11) pour y fournir le troisième signal d'état.

5. Interrupteur suivant la revendication 2 respectivement 3, **caractérisé en ce que** le premier (10), respectivement le deuxième (27), composant du détecteur comporte un premier, respectivement un deuxième, comparateur.

6. Interrupteur suivant l'une des revendications 1 à 5, **caractérisé en ce que** l'unité de traitement est formée par une unité de gestion d'énergie électrique d'un bâtiment.

7. Interrupteur suivant l'une des revendications 3 à 5, **caractérisé en ce qu'**un condensateur (9) est branché entre le premier (30) et le deuxième (28) pôle.

8. Interrupteur suivant l'une des revendications 2 à 5, **caractérisé en ce qu'**un condensateur (9) est branché entre le premier pôle (30) et un point de référence (32).

9. Interrupteur suivant la revendication 7 ou 8, **caractérisé en ce que** le condensateur (9) est relié à la sortie de l'organe de mesure (12).

10. Interrupteur suivant la revendication 7, 8 ou 9, **caractérisé en ce que** le premier pôle (30) est directement relié à une deuxième sortie de l'organe de mesure (12) qui elle-même est reliée à l'organe de déclenchement (13).

11. Interrupteur suivant la revendication 3 ou 4, **caractérisé en ce que** le premier (30), respectivement le deuxième (28), pôle de sortie de la première unité (6), respectivement de la deuxième unité (26), de l'organe de mesure (12) sont reliés à un autre comparateur (34), qui fait partie de l'organe de déclenchement (13), lequel autre comparateur (34) est agencé pour détecter le franchissement d'un premier, respectivement d'un deuxième, seuil par la tension délivré par la première unité (6), respectivement la deuxième unité (26), de l'organe de mesure (12), lequel autre comparateur (34) est également agencé et pour provoquer l'activation du mécanisme d'interruption (4) après détection que le premier et/ou le deuxième seuil a été franchi.

## Patentansprüche

1. Schalter (1), insbesondere ein elektronischer Auslöser, umfassend
ein Organ zur Erfassung (5, 25) elektrischen Stroms, das angeordnet ist, durch Induktion einen elektrischen Strom zu erfassen, der in einer Leitung für elektrischen Strom (2) strömt, die durch den Schalter (1) hindurchgeht, wobei der Schalter (1) ein Messorgan (12) umfasst, das mit dem Erfassungsorgan (5, 25) verbunden ist und angeordnet ist, an einem Ausgang (30) eine entsprechende Spannung dem elektrischen Strom, der vom Erfassungsorgan (5, 25) erfasst wird, zu liefern,
der Schalter (1) ein Auslöseorgan (13) umfasst, das mit dem Ausgang (30) des Messorgans (12) verbunden ist, wobei das Auslöseorgan (13) ein Relais (8) umfasst, um einen Mechanismus zur Unterbrechung (4) der Leitung für elektrischen Strom (2) zu aktivieren, wenn die Spannung, die vom Messorgan (12) geliefert wird, eine erste vorbestimmte Schwelle überschreitet,
der Schalter (1) einen Detektor (10) umfasst, der mit dem Ausgang (30) des Messorgans (12) verbunden ist,
wobei der Detektor (10) angeordnet ist, die Aktivierung des Unterbrechungsmechanismus (4) durch das Messorgan (12) und durch das Auslöseorgan (13) zu detektieren und ein erstes Zustandssignal zu erzeugen, wenn die Aktivierung des Unterbrechungsmechanismus (4) durch das Messorgan (12) und durch das Auslöseorgan (13) detektiert wurde,
wobei der Schalter (1) **dadurch gekennzeichnet ist, dass** der Detektor (10) angeordnet ist, eine Spannungsspitze (21) zu detektieren, die am Ausgang (30) auftritt, wenn der Unterbrechungsmechanismus (4) aktiviert ist, und angeordnet ist, ein erstes Zustandssignal auf der Grundlage der Detektion der Spannungsspitze (21) zu erzeugen,
der Schalter eine Verarbeitungseinheit (11) umfasst, der Detektor (10) mit einem ersten Eingang (14) einer Verarbeitungseinheit (11) verbunden ist, um dort das erste Zustandssignal bereitzustellen,
die Verarbeitungseinheit (11) einen zweiten Eingang (15) umfasst, der angeordnet ist, ein zweites Zustandssignal zu empfangen, das eine mechanische Trennung der Leitung für elektrischen Strom (2) angibt,
die Verarbeitungseinheit (11) angeordnet ist, auf Grundlage der empfangenen Zustandssignale eine Meldung über die Trennung der Stromleitung (2) und die den Grund dieser Trennung umfasst, zu erzeugen.

2. Schalter nach Anspruch 1, **dadurch gekennzeichnet, dass** das Erfassungsorgan ein erstes Element (5) und das Messorgan (12) eine erste Einheit (6) umfasst, wobei das erste Element (5) mit der ersten Einheit (6) verbunden ist, wobei das erste Element (5) angeordnet ist, einen Wechselstromdifferenzanteil des elektrischen Stroms zu erfassen, wobei die erste Einheit (6) angeordnet ist, eine entsprechende Spannung dem erfassten Wechselstromdifferenzanteil zu liefern, wobei die erste Einheit (6) einen ersten Pol (30) in elektrischer Verbindung mit dem Ausgang des Messorgans (12) und mit einem ersten Eingangspin einer ersten Komponente (10) des Detektors aufweist.

3. Schalter nach Anspruch 1 oder 2, **dadurch gekennzeichnet, dass** das Erfassungsorgan ein zweites Element (25) und das Messorgan (12) eine zweite Einheit (26) umfasst, wobei das zweite Element (25) mit der zweiten Einheit (26) verbunden ist, wobei das zweite Element (25) angeordnet ist, einen Gleichstromdifferenzanteil des elektrischen Stroms zu erfassen, wobei die zweite Einheit (26) angeordnet ist, eine entsprechende Spannung dem Gleichstromdifferenzanteil zu liefern, wobei die zweite Einheit (26) einen zweiten Pol (28) in elektrischer Verbindung mit dem Ausgang des Messorgans (12) und mit einem zweiten Eingangspin einer zweiten Komponente (27) des Detektors aufweist.

4. Schalter nach den Ansprüchen 2 und 3, **dadurch gekennzeichnet, dass** die erste Komponente (10) des Detektors angeordnet ist, die Aktivierung des Unterbrechungsmechanismus (4) durch das Auslöseorgan (13) unter Steuerung der ersten Einheit (6) des Messorgans (12) zu detektieren und das erste Zustandssignal zu erzeugen, wobei die zweite Komponente (27) des Detektors angeordnet ist, die Aktivierung des Unterbrechungsmechanismus (4) durch das Auslöseorgan (13) unter Steuerung der zweiten Einheit (26) des Messorgans (12) zu detektieren und ein drittes Zustandssignal zu erzeugen, wenn die Aktivierung des Unterbrechungsmechanismus (4) durch das Auslöseorgan (13) von der zweiten Einheit (26) detektiert wurde, wobei die zweite Komponente (27) mit einem dritten Eingang (17) der Verarbeitungseinheit (11) verbunden ist, um dort das dritte Zustandssignal bereitzustellen.

5. Schalter nach Anspruch 2 beziehungsweise 3, **dadurch gekennzeichnet, dass** die erste (10) beziehungsweise zweite (27) Komponente des Detektors einen ersten beziehungsweise zweiten Komparator aufweist.

6. Schalter nach einem der Ansprüche 1 bis 5, **dadurch gekennzeichnet, dass** die Verarbeitungseinheit von einer Einheit zur Verwaltung elektrischer Energie eines Gebäudes gebildet ist.

7. Schalter nach einem der Ansprüche 3 bis 5, **dadurch gekennzeichnet, dass** ein Kondensator (9) zwischen den ersten (30) und den zweiten (28) Pol geschaltet ist.

8. Schalter nach einem der Ansprüche 2 bis 5, **dadurch gekennzeichnet, dass** ein Kondensator (9) zwischen den ersten Pol (30) und einen Bezugspunkt (32) geschaltet ist.

9. Schalter nach Anspruch 7 oder 8, **dadurch gekennzeichnet, dass** der Kondensator (9) mit dem Ausgang des Messorgans (12) verbunden ist.

10. Schalter nach Anspruch 7, 8 oder 9, **dadurch gekennzeichnet, dass** der erste Pol (30) direkt mit einem zweiten Ausgang des Messorgans (12) verbunden ist, der seinerseits mit dem Auslöseorgan (13) verbunden ist.

11. Schalter nach Anspruch 3 oder 4, **dadurch gekennzeichnet, dass** der erste (30) beziehungsweise zweite (28) Ausgangspol der ersten Einheit (6) beziehungsweise der zweiten Einheit (26) des Messorgans (12) mit einem anderen Komparator (34) verbunden sind, der Teil des Auslöseorgans (13) ist, wobei der andere Komparator (34) angeordnet ist, die Überschreitung einer ersten beziehungsweise zweiten Schwelle durch die Spannung, die von der ersten Einheit (6) beziehungsweise der zweiten Einheit (26) des Messorgans (12) geliefert wird, zu detektieren, wobei der andere Komparator (34) ebenfalls angeordnet ist und die Aktivierung des Unterbrechungsmechanismus (4) nach Detektion, dass die erste und/oder zweite Schwelle überschritten wurde, herbeizuführen.

## Claims

1. Switch (1), in particular an electronic tripping device, comprising
a sensing member (5, 25) for sensing electric current arranged to inductively sense an electric current flowing through a line (2) for conducting electric current which passes through the switch (1),
which switch (1) comprises a measuring member (12) connected to the sensing member (5, 25) and arranged to deliver, at an output (30), a voltage corresponding to the electric current sensed by the sensing member (5, 25),
which switch (1) comprises a tripping member (13) connected to said output (30) of the measuring member (12), the tripping member (13) comprising a relay (8) for activating a switching mechanism (4) for interrupting the line (2) for conducting electric current when the voltage delivered by the measuring member (12) exceeds a first predetermined threshold,
said switch (1) comprises a detector (10) connected to the output (30) of the measuring member (12),
said detector (10) being arranged to detect the activation of the switching mechanism (4) by the measuring member (12) and by the tripping member (13) and to produce a first state signal when the activation of the switching mechanism (4) by the measuring member (12) and by the tripping member (13) has been detected,
said switch (1) is **characterized in that**
the detector (10) is arranged to detect a voltage peak (21) which appears at the output (30) when the switching mechanism (4) is activated and is arranged to produce the first state signal on the basis of said detection of the voltage peak (21),
said switch comprises a processing unit (11),
the detector (10) is connected to a first input (14) of a processing unit (11) in order to deliver the first state signal thereto,
which processing unit (11) comprises a second input (15) arranged to receive a second state signal indicating a mechanical interruption of the line (2) for conducting electric current,
which processing unit (11) is arranged to produce, on the basis of the received state signals, a message about the interruption of the current line (2) and comprising the cause of this interruption.

2. Switch according to Claim 1, **characterized in that** the sensing member comprises a first element (5) and the measuring member (12) comprises a first unit (6), the first element (5) being connected to the first unit (6), the first element (5) being arranged to sense an AC differential component of the electric current, the first unit (6) being arranged to deliver a voltage corresponding to the sensed AC differential component, which first unit (6) includes a first pole (30) which is electrically connected to the output of the measuring member (12) and to a first input pin of a first component (10) of the detector.

3. Switch according to Claim 1 or 2, **characterized in that** the sensing member comprises a second element (25) and the measuring member (12) comprises a second unit (26), the second element (25) being connected to the second unit (26), the second element (25) being arranged to sense a DC differential component of the electric current, the second unit (26) being arranged to deliver a voltage corresponding to the DC differential component, which second unit (26) includes a second pole (28) which is electrically connected to the output of the measuring member (12) and to a second input pin of a second component (27) of the detector.

4. Switch according to Claims 2 and 3, **characterized in that** the first component (10) of the detector is arranged to detect the activation of the switching mechanism (4) by the tripping member (13) under the control of the first unit (6) of the measuring member (12) and to produce the first state signal, which second component (27) of the detector is arranged to detect the activation of the switching mechanism (4) by the tripping member (13) under the control of the second unit (26) of the measuring member (12) and to produce a third state signal when the activation of the switching mechanism (4) by the tripping member (13) has been detected by the second unit (26), which second component (27) is connected to a third input (17) of the processing unit (11) in order to supply the third state signal thereto.

5. Switch according to Claim 2 or 3, respectively, **characterized in that** the first (10) or second (27) component, respectively, of the detector includes a first or a second comparator, respectively.

6. Switch according to one of Claims 1 to 5, **characterized in that** the processing unit is formed by an electric energy management unit of a building.

7. Switch according to one of Claims 3 to 5, **characterized in that** a capacitor (9) is connected between the first (30) and the second (28) pole.

8. Switch according to one of Claims 2 to 5, **characterized in that** a capacitor (9) is connected between the first pole (30) and a reference point (32).

9. Switch according to Claim 7 or 8, **characterized in that** the capacitor (9) is connected to the output of the measuring member (12).

10. Switch according to Claim 7, 8 or 9, **characterized in that** the first pole (30) is directly connected to a second output of the measuring member (12), which is itself connected to the tripping member (13).

11. Switch according to Claim 3 or 4, **characterized in that** the first (30) or the second (28) output pole, respectively, of the first unit (6) or the second unit (26), respectively, of the measuring member (12), is connected to another comparator (34), which forms part of the tripping member (13), which other comparator (34) is arranged to detect a first or a second threshold, respectively, being exceeded by the voltage delivered by the first unit (6) or the second unit (26), respectively, of the measuring member (12), which other comparator (34) is also arranged to cause the activation of the switching mechanism (4) after it has been detected that the first and/or the second threshold has been exceeded.
